# EUROPÄISCHE PATENTSCHRIFT

(11) **EP 0 985 859 B1**
(45) Veröffentlichungstag und Bekanntmachung des Hinweises auf die Patenterteilung: **26.10.2005**
(21) Anmeldenummer: 99117071.3
(22) Anmeldetag: 31.08.1999
(51) Int. Cl.: F16H 63/36, F16H 61/16

(54) **Vorrichtung an mehrgängigen Schaltgetrieben**
Device for multispeed shift gearboxes
Dispositif pour transmission de changement de plusieurs vitesses

(30) Priorität: 07.09.1998 DE 19840849
(43) Veröffentlichungstag der Anmeldung: 15.03.2000
(73) Patentinhaber: CLAAS Industrietechnik GmbH, 33106 Paderborn (DE)
(72) Erfinder: Strieker, Norbert, 33334 Gütersloh (DE); Engenhorst, Werner, 33428 Harsewinkel (DE); Gersmann, Manfred, 48231 Warendorf (DE)

(56) Entgegenhaltungen:
- DE-A- 3 315 221
- FR-A- 2 645 233
- GB-A- 2 089 450

## Beschreibung

Die Erfindung betrifft eine Vorrichtung gemäß dem Oberbegriff des Anspruchs 1.

Aus der DE 22 23 553 A1 ist eine gattungsgemäße Vorrichtung an einem mehrgängigen Getriebe bekannt, bei der zusätzlich zu dem Fixierelement ein Feststellelement vorgesehen ist, das die Schaltstange in eine vorgegebene Position arretiert. Dadurch, daß das Feststellelement in einem rechten Winkel zu dem Fixierelement auf die Schaltstange einwirkt, ist ein erhöhter Bauraum erforderlich. Darüber hinaus muß die Schaltstange derart ausgebildet sein, daß die von dem Feststellelement aufgebrachte Arretierungskraft sicher ausgeübt werden kann. Insbesondere bei dem Vorliegen von mehr als zwei Schaltstangen ist die bekannte Vorrichtung relativ aufwendig.

Aus der DE 196 47 788 A1 ist eine Gangsperre für Getriebe bekannt, bei der eine Schaltstange von einer Rastierhülse mit am Umfangsrand versetzt angeordneten Vertiefungen umgeben ist. Diese Vertiefungen dienen zum einen als Aufnahme für ein Fixierelement und zum anderen als Aufnahme für ein Feststellelement. Nachteilig an der bekannten Gangsperre ist, daß sie durch das Vorsehen des Rastierelementes einerseits und des um einen Winkel von 180° entlang der Umfangsfläche des Rastierelements versetzten Feststellelementes ein relativ großen Bauraum erfordert.

Es ist daher Aufgabe der Erfindung, ein mehrgängiges Schaltgetriebe derart weiterzubilden, daß die Schaltstange in einem mehrgängigen Schaltgetriebe auf einfache und platzsparende Weise an unterschiedlichen Stellen mit unterschiedlichen Fixierkräften fixiert werden kann.

Die Aufgabe ist mit den Merkmalen des Anspruchs 1 gelöst.

Der Vorteil der Erfindung ist insbesondere darin zu sehen, daß das Stellelement mit dem Fixierelement gekoppelt ist, wobei das Stellelement auf das Fixierelement im Sinne einer verstärkenden Kraftausübung zur Erzeugung einer Haltekraft einwirkt, die durch das Fixierelement auf die Schaltstange übertragen wird. Grundgedanke der Erfindung ist hierbei, daß lediglich das Fixierelement unmittelbar auf die Schaltstange einwirkt, während das Stellelement unter Kopplung des Fixierelementes auf die Schaltstange einwirkt. Hierdurch lassen sich platzsparend eine Mehrzahl von auf die Schaltstange wirkende Kräfte erzeugen.

Nach einer bevorzugten Ausführungsform der Erfindung ist das Stellelement in zwei Positionen bringbar, wobei das Fixierelement die Schaltstange in einer ersten Schaltposition mit einer Fixierkraft und in einer zweiten Halteposition mit einer größeren Fixierkraft beaufschlagt. Hierdurch wird vorteilhaft eine zweistufige Kraftbeaufschlagung der Schaltstange ermöglicht, wobei in einer Halteposition des Stellelementes ein ungewollter Schaltvorgang des Getriebes, durch eventuelle Lastwechsel im Getriebe oder durch Momente, die bei Bewegungen des Fahrzeuges auf das Schaltgestänge einwirken, wirksam verhindert wird. In der Schaltposition des Stellelementes wird ein Gangwechsel ermöglicht, wobei die Schaltkraft derart eingestellt ist, daß die Bedienperson das Einrasten des Fixierelementes beim eingelegten Gang wahrnimmt. Vorzugsweise erfolgt der Gangwechsel in einem drehmomentlosen Zustand des Getriebes, wobei während des Schaltens von dem Fixierelement selbsttätig eine konstante Schaltkraft auf die Schaltstange ausgeübt wird.

Nach einer Weiterbildung der Erfindung ist das Fixierelement wirkverbunden durch eine Feder, in der Schaltposition des Stellelementes, mit einer Fixierkraft und in der Halteposition durch ein federgespanntes Stellelement direkt mit einer größeren Fixierkraft beaufschlagt. Unabhängig von der Position des Stellelementes wird somit jederzeit eine vorgegebene Kraft auf die Schaltstange ausgeübt.

Nach einer Ausgestaltung der Erfindung ist das Stellelement als Schaltstift ausgebildet, der mittels einer Steuereinrichtung durch axiale Verschiebung von der ersten Schaltposition in eine zwei vorgegebene Halteposition bringbar ist. Hierdurch entsteht ein besonders kostengünstiger Aufbau der Vorrichtung, da nur ein einfach herzustellendes Drehteil zur Erzeugung von unterschiedlichen Fixierkräften Verwendung findet.

In einer weiteren Ausgestaltung der Erfindung, wird der Schaltstift mittels einer hydraulischen Steuereinrichtung betätigt. Durch die Verwendung eines Schaltstiftes und eines hydraulischen Antriebes ist das Stellelement als eine Art Kolben ausgeführt. Dieser Kolben läßt sich leicht in einer Bohrung führen und außerdem durch kostengünstige und bekannte Mittel gegenüber den benachbarten Gehäuseteilen abdichten.

Nach einer besonders bevorzugten Ausführungsform ist dem Schaltstift eine erste Feder und eine zweite Feder zugeordnet, wobei die Federn in gegenläufiger Verstellung zu dem Schaltstift angeordnet sind. Dies hat den Vorteil, das in der Halteposition des Stellelementes keine Beaufschlagung mit hydraulischen Mitteln notwendig ist. Dies stellt eine Art Eigensicherheit der Vorrichtung dar, sodaß bei einem Ausfall der Druckmittelversorgung ein sicheres Halten der Schaltstange gewährleistet wird.

Besonders vorteilhaft ist, wenn die erste Feder mit einem ersten Ende an dem Fixierelement anliegt und sich mit dem anderen gegenüberliegenden Ende gegen einen ersten Anschlag des Schaltstiftes abstützt.

In Ausgestaltung einer weiteren erfinderischen Lösung stützt sich die zweite Feder mit einem ersten Ende an einem Gehäuseteil und mit einem gegenüberliegenden Ende an einem zweiten Anschlag des Schaltstiftes ab.
Eine vorteilhafte Anordnung der beiden Federn ergibt sich, wenn sie koaxial zueinander angeordnet sind und eine entgegengesetzte Verstellwirkung auf den Schaltstift haben. Die beiden Federn sind hierbei vorteilhaft axial voneinander beabstandet angeordnet.

In einer weiteren Ausgestaltung der Erfindung, liegt in axialer Richtung des Schaltstiftes zwischen den Federn ein Anschluß, mittels dessen ein Druckmittel in diesen Bereich zuführbar ist, so daß die von der zweiten Feder aufgebrachte Haltekraft kompensiert werden kann. Bei der Beaufschlagung des Schaltstiftes befindet sich dieser in seiner Schaltposition, in der ausschließlich die erste Feder auf das Fixierelement wirkt. Vorteilhaft wird nur während des kurzzeitigen Schaltens, im drehmomentlosen Zustand des Getriebes, die zweite Federkraft kompensiert. Bei einem Defekt beziehungsweise einem Ausfall der Steuereinrichtung übt die zweite Feder immer eine Fixierkraft aus, so daß ein unerwünschtes Gangspringen beziehungsweise ein unerwünschter Gangwechseln wirksam verhindert wird.

In einer weiteren Ausgestaltung der Erfindung, kann zusätzlich zu dem sich in axialer Richtung des Schaltstiftes befindlichen Bereiches, der gegenüber den Stirnflächen des Schaltstiftes abgedichtet ist, auch der dem Fixierelement gegenüberliegende Stirnbereich des Schaltstiftes, über einen weiteren Anschluß, mit der Steuereinrichtung verbunden sein. Vorteilhaft ist es dann möglich, das Fixierelement mit einer Sperrkraft zu beaufschlagen, so daß eine Bewegung der Schaltstange wirkunsvoll verhindert werden kann.

Nach einer vorteilhaften Weiterbildung der Erfindung befinden sich in der Steuereinrichtung mindestens ein Schaltventil und eine Druckmittelquelle, mittels welcher der Schaltstift entsprechend der Ansteuerung der Steuereinrichtung beaufschlagt werden kann. Das Schaltventil kann so ausgeführt sein, daß es im nicht geschalteten Zustand beide Anschlüsse der Vorrichtung gleichzeitig mit Druckmittel versorgt und im geschalteten Zustand nur einen Anschluß mit dem Tank verbindet. Es können auch mehrere Schaltventile vorhanden sein, so daß beim vorhandensein mehrerer Anschlüsse an der Vorrichtung die Anschlüsse unabhängig voneinander beaufschlagt werden können. Eine Ausstattung mit unterschiedlichen Druckmittelquellen zur Erzeugung und Versorgung der Anschlüsse mit unterschiedlichen Drücken ist ferner denkbar.

In einer weiteren Ausbildung der Erfindung ist es vorgesehen, daß mittels der Steuereinrichtung weitere Einrichtungen in Verbindung mit der Ansteuerung des Schaltstiftes angesteuert werden können. Vorteilhaft läßt sich dadurch eine Kopplung zu weiteren Einrichtungen herstellen, mittels welcher man beispielsweise eine Drehmomentfreischaltung des Schaltgetriebes erreichen kann. Dies kann eine gleichzeitige Betätigung einer bekannten zwischen dem Antriebsmotor und dem Schaltgetriebe geschalteten Kupplung sein. An einer landwirtschaftlichen Arbeitsmaschine finden überwiegend hydrostatische Antriebseinheiten Verwendung. Mittels einer Verstellpumpe und eines Konstantmotors wird die Fahrgeschwindigkeit der Erntemaschine im Bereich des ausgewählten Ganges des nachgeschalteten Schaltgetriebes variiert. Bei solchen Antriebseinheiten kann es vorkommen, daß auch während des Stillstandes des Fahrzeuges der Fahrantrieb, insbesondere das Getriebe, nicht drehmomentfrei ist. Unter diesen Verspannungen im Getriebe läßt sich nur unter Einsatz einer erhöhten Betätigungskraft eine Schaltstange bewegen. Zur Freischaltung ist es deshalb notwendig, die Fördermenge der Verstellpumpe auf Null zu regeln. Eine weitere Möglichkeit besteht darin, die Anschlüsse des Konstantmotors durch ein Kurzschlußventil kurzzuschließen.

In einer besonderen Ausgestaltung der Erfindung ist es deshalb vorgesehen das Kurzschlußventil mit der Steuereinrichtung zu verbinden und eine Ansteuerung des Kurzschlußventils in Verbindung mit der Ansteuerung der erfindungsgemäßen Vorrichtung durchzuführen.

Die Ansteuerung des Schaltstiftes kann derart erfolgen, daß die Steuereinrichtung den Schaltstift über beide Anschlüsse gleichzeitig mit gleichem oder unterschiedlichem Druck versorgt. Desweitern ist es durch die Steuereinrichtung möglich, jeweils nur einen Anschluß mit Druckmittel zu versorgen. Dabei kann die Beaufschlagung mit Druckmittel eine Erhöhung oder eine Verringerung der Fixierkraft auf das Fixierelement hervorrufen. In einer besonderen Ausgestaltung der Erfindung ist es daher vorgesehen, daß bei der Ansteuerung der Steuereinrichtung der Schaltstift aus seiner Halteposition in seine Schaltposition mit niedrigerer Fixierkraft gebracht wird.

Besonders vorteilhaft ist es in einer weiteren Ausgestaltung der Erfindung die Ansteuerung der Steuereinrichtung derart erfolgen zu lassen, daß der Schaltstift aus seiner Halteposition in seine Schaltposition entgegen der Federwirkung der zweiten Feder verschoben wird. Der Schaltstift löst sich dabei von dem Fixierelement und nur die erste Feder wirkt auf das Fixierelement beziehungsweise auf die Schaltstange ein. Ein leichtes Schalten ist dann möglich. Die Beaufschlagung des Schaltstiftes ist hierbei vorteilhaft nur während des Schaltvorganges notwendig.

In einer weiteren Ausgestaltung der Erfindung, wird die Steuereinrichtung so angesteuert, daß der Schaltstift in seiner Halteposition mit einer weiteren Sperrkraft beaufschlagt wird. Dies kann durch eine Druckmittelbeaufschlagung beider Anschlüsse oder nur durch die Beaufschlagung des Stirnbereichs des Schaltstiftes erfolgen. Wobei die letztere Beaufschlagungsart die höhere Sperrkraft erzeugt. Durch diese Ausgestaltung ist es erstmalig möglich, die Schaltstange in einem mehrgängigen Schaltgetriebe an seine unterschiedlichen Aufgabe anpassen zu können. Für einen Schaltvorgang wird die Schaltstange mit einer Fixierkraft in der Schaltposition des Schaltstiftes zur Findung eines Ganges beaufschlagt. Im normalen Fahrbetrieb oder bei Stillstand des Fahrantriebes wird durch die in der Halteposition höhere Fixierkraft des Schaltstiftes verhindert, daß es zu Gangspringern kommen kann, wobei eine Notschalteigenschaft erhalten bleibt. Bei der Beaufschlagung des Schaltstiftes mit der Sperrkraft in der Halteposition des Schaltstiftes, wird wirkungsvoll verhindert, daß ein Gangwechsel erfolgen kann. Die Vorrichtung wirkt hierbei wie eine Schaltsperre, so daß selbst beim Bremsbetrieb der Antriebseinheit ein ungewolltes Auslegen eines eingelegten Ganges unmöglich ist. Hierdurch kann die Bremsanlage insgesamt kleiner dimensioniert werden beziehungsweise die Bremsleistung der Bremsanlage erhöht werden.

In einer besonderen Ausgestaltung der Erfindung, wird die Ansteuerung der Steuereinrichtung unter Berücksichtigung weiterer auf die Fahrgeschwindigkeit des Fahrzeuges einflußnehmende Einrichtungen, wie beispielsweise die Fahrzeugbremseinrichtung oder die hydrostatische Antriebseinrichtung oder dessen Stelleinrichtungen durchgeführt. Hierdurch können vorteilhaft verschiedene Fahrsituationen des Fahrzeuges erkannt und sich nachteilig auswirkende Ansteuerungen der Vorrichtung verhindert werden. So ist es beispielsweise in einer Ausgestaltung der Erfindung vorgesehen, die Stellung des Fahrhebels bei der Ansteuerung der Steuereinrichtung zu berücksichten. Hierdurch läßt sich zum Beispiel, durch eine erkannte Neutralstellung des Fahrhebels, ableiten, daß der Fahrer des Fahrzeuges eine Stillsetzung des Fahrzeuges vorgewählt hat. Die Ansteuerung des Stellelementes kann so verriegelt sein, daß eine Bewegung des Stellelementes aus der Halteposition in die Schaltposition nur bei vorhandener Neutralstellung des Fahrhebels erfolgen kann.
Desweiteren kann durch die Einbeziehung der Fahrhebelstellung verhindert werden, daß die Schaltstange bei Stillstand des Fahrzeuges mit einer Sperrkraft beaufschlagt wird. Die Ansteuerung der Steuereinrichtung kann so erfolgen, daß dies erst bei der Überschreitung einer bestimmten Fahrhebelauslenkung möglich ist.

In einer weiteren Ausgestaltung der Erfindung wird die Stellung des Schalthebels bei der Ansteuerung der Steuereinrichtung berücksichtigt. Prinzipiell kann hiermit erkannt werden ob überhaupt ein Gang eingelegt ist. Eine Ansteuerung der Steuereinrichtung kann beispielsweise bei Neutralstellung des Schalthebel immer derart erfolgen, daß die Vorrichtung die Schaltstange mit der geringsten Fixierkraft beaufschlagt. Die Steuereinrichtung kann ferner so angesteuert werden, daß eine Beaufschlagung der Schaltstange mit der Sperrkraft nur in dem für die Straßenfahrt geeigneten Gang ermöglicht wird.

Die Erfindung läßt sich auch so weiter ausgestalten, daß die Ansteuerung der Steuereinrichtung in Abhängigkeit einer Tasterbetätigung erfolgt, wobei der Taster vorteilhaft in dem Schalthebelkopf integriert ist. Mittels des Tasters, wird der Steuereinrichtung die Schaltabsicht des Fahrers mitgeteilt. Unter einer eventuellen Berücksichtung weiterer Einrichtungen wird dann die Steuereinrichtung so angesteuert, daß die Schaltstange mit einer geringen Fixierkraft beaufschlagt wird, indem der Schaltstift aus seiner Halteposition in seine Schaltposition verstellt wird.

In einer weiteren Ausgestaltung Erfindung, wird bei der Ansteuerung der Steuereinrichtung die Stellung einer Bremsbetätigungseinrichtung für die Fahrzeugbremse berücksichtigt. Es kann hierdurch vorteilhaft verhindert werden, daß bei einer Abbremsung des Fahrzeuges der Gang ausgelegt werden kann, indem die Ansteuerung der Steuereinrichtung zum Wechsel eines Ganges verhindert wird. Ferner kann durch die Abfrage der Stellung der Bremsbetätigungseinrichtung und eventuell in Abhängigkeit der Stellung weiterer Einrichtungen, die Schaltstange mit einer Sperrkraft beaufschlagt werden.

Besonders vorteilhaft ist eine Ausgestaltung der Erfindung, wenn bei einer Ansteuerung der Steuereinrichtung zur Verstellung des Schaltstiftes aus der Halteposition in die Schaltposition auch gleichzeitig ein Kurzschlußventil im hydrostatischen Fahrantrieb angesteuert wird. Durch die kombiniert Ansteuerung ergibt sich ein besonders effektive Schalterleichterung für den Betätiger der Schaltstange. Das Kurzschlußventil ermöglicht die Freischaltung des Schaltgetriebes von Verspannungen, so daß sich die Zahnräder leicht durch die Schaltstange verschieben lassen.

Damit verhindert wird, daß bei einer Überschreitung einer bestimmten Fahrgeschwindigkeit ein Gangwechsel möglich ist oder bei einer Unterschreitung einer bestimmten Fahrgeschwindigkeit eine Sperrkraft auf die Schaltstange einwirken kann, wird in einer weiteren Ausgestaltung der Erfindung die Fahrgeschwindigkeit des Fahrzeuges bei der Ansteuerung der Steuereinrichtung berücksichtigt.

Die Erfindung wird anhand der folgenden Ausführungsbeispiele näher erläutert. Es zeigen:
- Figur 1: einen Teilschnitt der erfindungsgemäßen Vorrichtung in doppelter Ausführung, wobei sich die Schaltstifte in der Halteposition befindet,
- Figur 2: einen Teilschnitt der Vorrichtung nach Figur 1, wobei sich die Schaltstifte in der Schaltposition befinden,
- Figur 3: einen Teilschnitt einer nicht erfindungsgemäßen Vorrichtung,
- Figur 4: einen Teilschnitt eines Ausführungsbeispiels der erfindungsgemäßen Vorrichtung mit weiterem Anschluß,
- Figur 5: einen Teilschnitt der Vorrichtung nach Figur 4 mit vereinfachte Ansteuerung und
- Figur 6: eine schematische Darstellung der Anwendung der erfindungsgemäßen Vorrichtung in Verbindung mit weiteren Einrichtungen des Fahrzeuges.

Die erfindungsgemäße Vorrichtung ist Teil eines Getriebes, insbesondere eines Schieberadgetriebes und findet Anwendung in selbstfahrenden Erntemaschinen, insbesondere in Mähdreschern, Feldhäckslern etc. Die Fahrantriebe in den genannten Maschinen zeichnen sich durch eine hydrostatische Antriebseinheit zwischen dem Antriebsmotor und dem Schaltgetriebe aus.

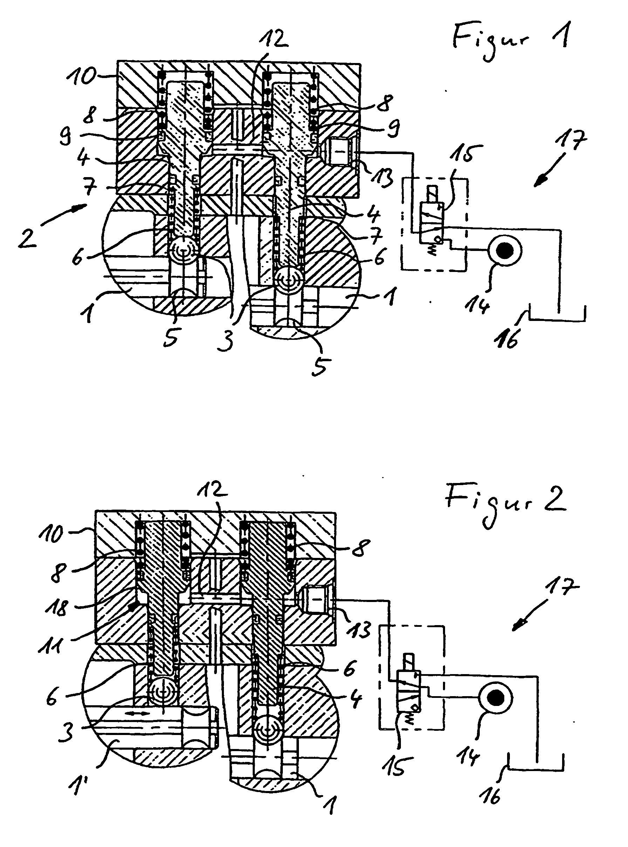

Wie aus Figur 1 ersichtlich ist, ist einer Schaltstange 1 eines Getriebes 2 eine federbelastete Kugel 3 als Fixierelement und ein federbelasteter Schaltstift 4 als Stellelement zugeordnet. Die Kugel 3 ist in einer konkavförmigen Ringnut 5 der Schaltstange 1 formschlüssig eingefaßt, wobei sie sich mit einer ersten Feder 6 gegen einen Anschlag 7 des Schaltstiftes 4 abstützt. Die erste Feder 6 weist eine solche Federkraft auf, daß die Schaltstange 1 rastend in axialer Richtung verschoben werden kann.
In der dargestellten Halteposition des Schaltstiftes 4, wirkt auf die Kugel 3 eine auf der Kugel 3 abgewandten Seite des Schaltstiftes angeordnete zweite Feder 8 ein, die stärker als die Feder 6 ausgebildet ist. Diese weist eine solche Federkraft auf, daß der Schaltstift 4 bzw. die Kugel 3 mit einer größeren Kraft beaufschlagt, d.h. die Schaltstange 1 kann in axialer Richtung nur unter einer größeren Betätigungskraft verschoben werden. Die zweite Feder 8 weist einen größeren Durchmesser auf als die erste Feder 6. Mit einem stirnseitigen Ende stützt sie sich gegen einen Anschlag 9 des Schaltstiftes 4 und mit einem gegenüberliegenden Ende gegen ein Gehäuseteil 10 ab, das vorzugsweise als Deckelteil 10 ausgebildet ist.

In einem in Richtung der Kugel 3 verjüngenden mittleren Bereich 11 des Schaltstiftes 4 ist der den Schaltstift 4 aufnehmende Hohlraum über eine Querbohrung 12 mit einem gleichartig ausgebildeten und die gleichen Bauteile aufweisenden Hohlraum verbunden. Der randseitige Hohlraum weist in diesem Bereich einen Druckmittelanschluß 13 auf, mittels dessen ein von einer Pumpe 14 gefördertes Druckmittel in den mittleren Bereich zuführbar ist. Die Pumpe 14 bildet zusammen mit einem Schaltventil 15 sowie einem Tank 16 eine hydraulische Steuereinrichtung 17, die den Hohlraum in der Halteposition des Schaltstiftes 4 gemäß Figur 1 drucklos hält und in einer Schaltposition des Schaltstiftes 4 gemäß Figur 2 druckbeaufschlagt. Durch eine elektromagnetische Betätigung des als 3/2-Wegeventil ausgebildeten Schaltventils 15 (Schaltmittel) in Durchlaßstellung gemäß Figur 2 wird der Schaltstift 4 entgegen der Federwirkung der zweiten Feder 8 in radialer Richtung von der Schaltstange 1 weg verschoben, so daß nunmehr lediglich die erste Feder 6 unter Abstützung an dem Anschlag 7 die Kugel 3 in der Ringnut 5 beaufschlagt. Dabei ist das der Schaltstange 1 zugewandte stirnseitige Ende des Schaltstiftes 4 zu der Kugel 3 beabstandet, während das von der Schaltstange 1 abgewandte Ende des Schaltstiftes 4 an der Innenseite des Deckelteils 10 anliegt. Die Kugel 3 wird von der Feder 6 mit einer Fixierkraft beaufschlagt, die einen Gangwechsel erlaubt. Zu diesem Zweck wird eine Schaltstange 1', gemäß Figur 2 in axialer Richtung unter Herausbewegung der Kugel 3 aus der muldenförmigen Ringnut 5 verschoben. Die entgegengesetzt wirkende Feder 6 bewirkt, daß die Kugel 3 in der nächsten Schaltstellung rastend in die nächste Ringnut 5 eingreifen kann. Hierdurch wird gewährleistet, daß der gewünschte Getriebegang sicher erkannt bzw. eingelegt werden kann.
In der Halteposition des Schaltstiftes 4 gemäß Figur 1 ist das Schaltventil 15 in Sperrstellung geschaltet, so daß die zweite Feder 8 unter Zusammendrücken der Fixierfeder 6 und unter Anlage des der Schaltstange 1 zugewandten Endes des Schaltstiftes 4 an der Kugel 3 mit einer größeren Fixierkraft die Kugel 3 in der Ringnut 5 der Schaltstange 1 hält. Bei Ausfall der elektrischen Stromversorgung bzw. der hydraulischen Steuereinrichtung 17 ist das beschriebene Ausführungsbeispiel eigensicher, d.h. der Schaltstift 4 befindet sich in der Halteposition, so daß ein Gangwechsel nur unter Aufbringung einer größeren Schaltkraft möglich ist. Erst durch Druckbeaufschlagung des mittleren Bereiches 11, in dem ein sich entgegen der Schaltstange 1 konusförmig verbreiterndes Mittelstück 18 des Schaltstiftes 4 befindet, tritt eine Entlastung der Kugel 3 ein, so daß sie lediglich mit einer verminderten Fixierkraft gehalten ist. Vom mittleren Bereich 11 bzw. von der Querbohrung 12 in Richtung der Schaltstange 1 erstreckt sich der Schaltstift 4 unter Bildung einer Gleitpassung in Richtung der Kugel 3.

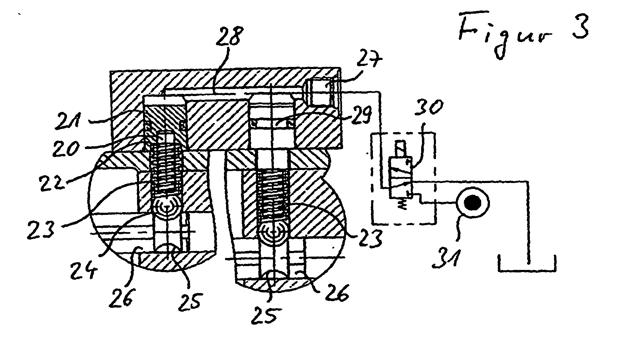

Nach der Vorrichtung gemäß Figur 3 kann ein Schaltstift 20 in einer Aufnahme eines Kolbens 21 gelagert sein. Der Kolben 21 weist einen ringförmigen Anschlag 22 auf, an dem sich eine Fixierfeder 23 abstützen kann, um an einem gegenüberliegenden stirnseitigen Ende eine Kugel 24 in einer Ringnut 25 einer Schaltstange 26 zu fixieren. Zur Erzeugung einer größeren Haltekraft, nämlich zur Erzeugung einer Sperrkraft, in der ein Gangwechsel nicht möglich ist, ist der Kolben 21 auf einer dem Schaltstift 20 abgewandten Seite mit einem Druckmittelanschluß 27 über Querbohrungen 28 mit einer Druckmittelquelle 31 verbunden. Zur Erlangung der in Figur 3 dargestellten Halteposition des Schaltstiftes 20, ist ein Schaltventil 30 in Durchgangsstellung geschaltet, so daß der Kolben 21 mit dem Druckmittel beaufschlagt ist und die Kugel 24 mit einer die Fixierfeder 23 zusammendrückenden Sperrkraft in der Ringnut 25 hält. In Sperrstellung des Schaltventils 30 besteht keine Verbindung zwischen einer Druckmittelquelle 31 und dem Druckmittelanschluß 27, so daß ausschließlich die Fixierfeder 23 mit einer geringeren Fixierkraft auf die Kugel 24 wirkt.

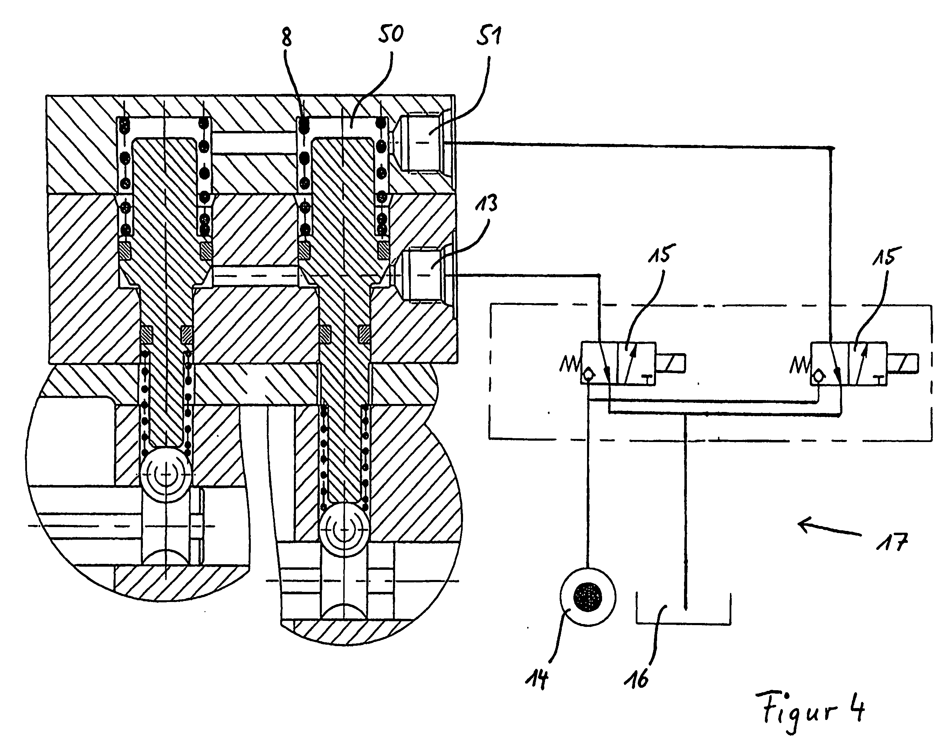

Figur 4 zeigt einen Teilschnitt eines weiteren Ausführungsbeispiels der erfindungsgemäßen Vorrichtung mit einem weiteren Anschluß 51. Über diesen Anschluß 51 kann die in axialer Richtung des Schaltstiftes 4 der der Kugel 3 gegenüberliegende Stirnbereich 50 mit einem Druckmittel beaufschlagt werden. Der Anschluß 51 ist in dieser Ausführungform mit einem Schaltventil 15 in der Steuereinrichtung 17 verbunden und kann daher unabhängig von der Druckmittelversorgung des Anschlusses 13 mit Druckmittel versorgt werden. Diese Ausführungsform stellt für die Ansteuerung der Vorrichtung die höchste Flexibilität dar. Bei einem Ausfall der Druckmittelversorgung, beispielsweise bei einem Stillstand des Antriebsmotors des Fahrzeuges, wird der Schaltstift 4 in der Halteposition und die Schaltstange sicher durch eine erhöhte Haltekraft der Feder 8 gehalten.

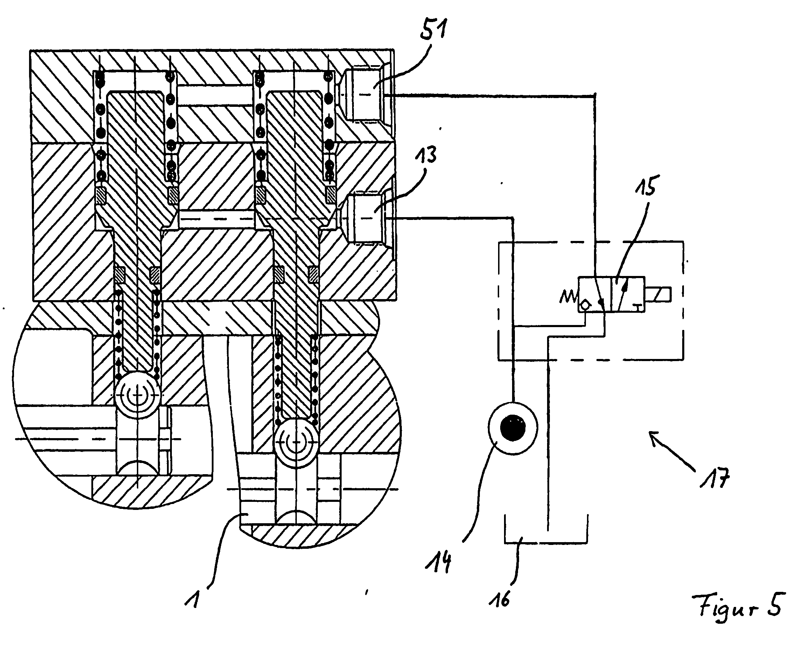

Figur 5 unterscheidet sich gegenüber Figur 4 durch eine vereinfachte kostengünstigere Ansteuerung der beiden Anschlüsse 13, 51 mit Druckmittel. Die Druckmittelquelle 14 der Steuereinrichtung 17 steht ständig mit dem Anschluß 13 in Verbindung. Der Anschluß 51 steht mit dem Schaltventil 15 in Verbindung und kann je nach Schaltstellung den Anschluß 51 mit der Druckmittelquelle 14 oder dem Tank 16 verbinden. Wird nun der Anschluß 51 mit Druckmittel beaufschlagt, wirkt auf die Schaltstange 1 eine Sperrkraft. Bei einer Verbindung des Anschlußes 51 mit dem Tank 16, wird der Schaltstift 4 in die Schaltposition verschoben und das Getriebe kann leicht geschaltet werden. Diese Ausgestaltung der Vorrichtung hat gegenüber der in Figur 3 dargestellten Vorrichtung den Vorteil, daß bei einem Ausfall der Druckmittelquelle 14 die Schaltstange 1 durch die erhöhte Haltekraft des Schaltstiftes 4 sicher gehalten wird.

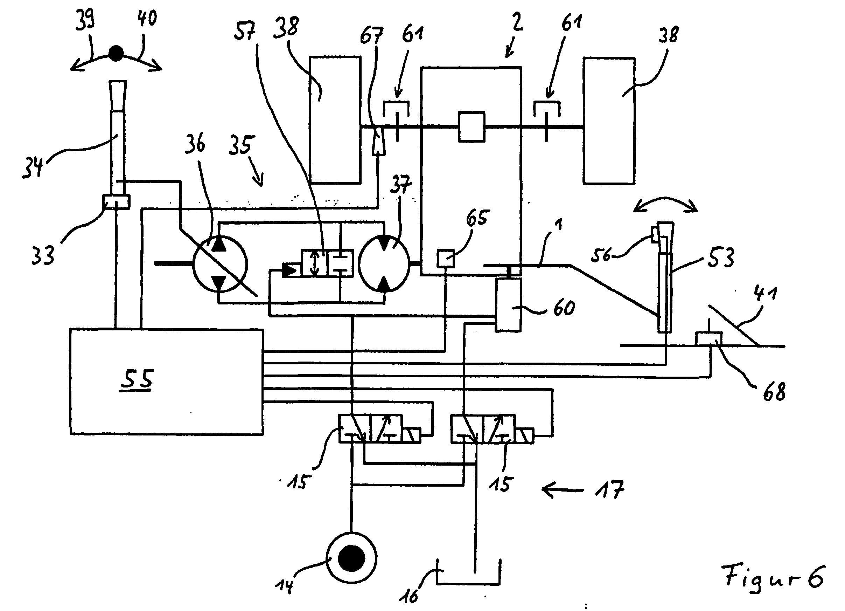

Figur 6 stellt eine schematische Anwendung der erfindungsgemäßen Vorrichtung, gemäß der Ausführungsform in Figur 4, in Verbindung mit weiteren Einrichtungen eines Fahrzeuges dar. Der Fahrhebel 34 dient üblicherweise dazu, eine hydrostatische Antriebseinheit 35 zu betätigen. Die Antriebseinheit 35 weist eine Verstellpumpe 36 und einen Konstantmotor 37 auf Über die Bewegung des Fahrhebels 34 kann die Verstellpumpe 36 den Konstantmotor 35 mit unterschiedlichen Fördermengen und mit zwei entgegengesetzten Förderrichtungen versorgen. Der Konstantmotor 37 ist über das Getriebe 2 mit einer Anzahl von Rädern 38 verbunden. Bei Bewegung des Fahrhebels 34 in eine Vorwärtsrichtung entsprechend dem Pfeil 39 dreht sich der Konstantmotor 37 in eine erste Richtung, wobei das Getriebe 2 das Drehmoment den Rädern 38 in eine vorwärtsgerichtete Bewegung bereitstellt. Bei einer Bewegung des Fahrhebels in entgegengesetzter Richtung gemäß Pfeil 40 wird der Konstantmotor 37 in umgekehrter Drehrichtung betätigt, so daß sich die Räder 38 in entgegengesetzter Richtung drehen. Die Stellung des Fahrhebels 34 wird über einen Schalter oder eine Meßeinrichtung 33 erkannt und steht der Ansteuereinrichtung 55 zur weiteren Verwendung zur Verfügung. Die von der Verstellpumpe 36 geförderte Menge, kann durch ein Kurzschlußventil 57 kurzgeschlossen werden, so daß dann der Konstantmotor 37 kein Dehmoment an das Getriebe 2 abgibt. Die Ansteuerung des Kurzschlußventils 57 kann elektromagnetisch oder auch wie dargestellt durch eine hydraulische Vorsteuerung erfolgen. Die dargestellt Ansteuerung ist besonders vorteilhaft, da sie in Verbindung mit der Ansteuerung der erfindungsgemäßen Vorrichtung 60 ohne zusätzliche Bauteile durchgeführt werden kann.
Zur Ansteuerung der Steuereinrichtung 17 ist die Ansteuereinrichtung 55 mit einer Einrichtung 65 verbunden, mittels welcher die Stellung des Schalthebels 53 beziehungsweise die gewählte Übersetzung des Getriebes 2 erkannt werden kann. An dem Schalthebel 53 ist ferner ein Taster 56 abgebracht, mit welchem der Bediener des Fahrzeuges der Ansteuereinrichtung seine Schaltabsicht mitteilen kann. In der einfachsten Ausführungsform der Ansteuereinrichtung 55, wird durch die Betätigung des Tasters 56 der Schaltstift in der Vorrichtung 60 mittels der Steuereinrichtung 17 aus seiner Halteposition in seine Schaltposition verschoben und der Bediener kann dann mit geringer Schaltkraft einen Gangwechsel bei Stillstand des Fahrzeuges durchführen. Durch eine gleichzeitige Ansteuerung des Kurzschlußventils 57 kann der Gangwechsel auch bei einer ausgelenkten Stellung des Fahrhebels 34 durchgeführt werden. Die in selbstfahrenden Landmaschinen verwendeten Getriebe sind in der Regel nicht synchronisiert. Vorteilhaft sollte daher einen Gangwechsel nur bei Stillstand der Maschine oder nur bei einer geringer Fahrgeschwindigkeit vorgenommen beziehungsweise zuzulassen werden. Dafür ist an der Antriebswelle der Räder 38 ein Drehzahlgeber 67 angebracht, der die Fahrgeschwindigkeit ermittelt und der Ansteuereinrichtung 55 zu Verfügung stellt. So kann beispielsweise dem Bediener der Erntemaschine, bei der Betätigung des Tasters 56 und einer vorhanden zu hohen Fahrgeschwindigkeit, ein Gangwechsel durch eine Beaufschlagung der Schaltstange mit der Sperrkraft verwehrt werden oder auch durch eine einfache entsprechende Mitteilung in einem vorhandenem Display auf eine unerlaubte Gangwechselabsicht hingewiesen werden.

Die Auslegung der Feder 8 kann so erfolgen, daß es bei einer Verringerung der Fahrgeschwindigkeit des Fahrzeuges, welche durch eine Fahrhebelbewegung hervorgerufen wird, zu keinem ungewolltem Gangspringer kommen kann. Durch die Abfrage der Fahrhebelstellung ist es ferner möglich, bei einer Reduzierung der Auslenkung zur Verringerung der Fahrgeschwindigkeit, auch die Schaltstange durch eine Beaufschlagung mit einer Sperrkraft, vor Gangspringern zu schützen. Es ist ferner vorgesehen, die Schaltstange mit einer Sperrkraft zu beaufschlagen, wenn das Fahrzeug durch eine Bremse 61 abgebremst wird. Dazu kann die Ansteuereinrichtung 55 die Stellung eines Bremsbetätigungseinrichtung, wie beispielsweise eine Bremspedal 41, durch eine Schalter 68 oder Drehgeber abfragen. Durch diese kombinierte Ansteuerung, kann die hydrostatische Antriebseinheit 35 erstmalig als Bremse mitgenutzt werden und hierdurch die zuvor notwendige Bremsleistung verringert sowie die Bremse 61 kostenreduziert ausgeführt werden.

Die Beaufschlagung der Schaltstange 1 mit einer Sperrkraft, hat bei der Ansteuerung der Steuereinrichtung 17 nur bei höherer Fahrgeschwindigkeit höchste Priorität. Wird eine bestimmte Fahrgeschwindigkeit unterschritten, ist die Bremswirkung der hydrostatischen Antriebseinheit 35 nur sehr gering. Außerdem muß bei annäherndem Stillstand des Fahrzeug und betätigter Bremse, beispielsweise zum Halten des Fahrzeuges am Hang, ein Gangwechsel ermöglicht werden. Durch die Einbeziehung der Fahrgeschwindigkeit bei der Ansteuerung der Steuereinrichtung ist es möglich, eine vollautomatisierte Beaufschlagung der Schaltstange mit unterschiedlichen Fixierkräften zu realisieren.

Anschließend sein noch erwähnt, daß alternativ die hydraulische Steuereinrichtung 17 auch als pneumatische oder elektromagnetische Steuereinrichtung ausgebildet sein kann. Für den einschlägigen Fachmann ist es außerdem ableitbar, auch noch weitere Kombinationen in Verbindung mit weiteren Fahrzeugeinrichtungen zur Verhinderung und Ansteuerung bestimmter Fixierungskräfte auf die Schaltstange vorzusehen. Auch die Einbeziehung von elektrischen Datenübertagungsmittel beziehungsweise mechanischen Kopplungen und damit verbundenen weiteren Ansteuermöglichkeiten der Vorrichtung stellen in Verbindung mit der beschriebenen Vorrichtung keine weiteren erfinderischen Lösungen dar.

## Patentansprüche

1. Vorrichtung zum Arretieren einer Schaltstange (1) eines mehrgängigen Schaltgetriebes (2) mit mindestens einer Schaltstange (1), umfassend mindestens ein Fixierelement (3) sowie ein Stellelement (4), wobei die Schaltstange (1) in jeweils einer vorgegebenen Stellung mit mindestens einem Fixierelement (3) zum Fixieren der Schaltstange (1) beaufschlagbar ist und das Fixierelement (3) mit dem Stellelement (4) derart verbunden ist, dass das Stellelement (4) mittels einer Steuereinrichtung (17) in mindestens zwei unterschiedlichen Positionen zum Fixierelement (3, 24) einstellbar ist,
**dadurch gekennzeichnet,**
**dass** dem Stellelement (4) und dem Fixierelement (3) separate Federelemente (6, 8) zugeordnet sind, wobei die Federkraft der dem Stellelement (4) zugeordneten Feder (8) größer als die Federkraft der dem Fixierelement (3) zugeordneten Feder (6) ist.

2. Vorrichtung nach Anspruch 1,
**dadurch gekennzeichnet, daß**
das Stellelement (4) in zwei Positionen bringbar ist, wobei das Fixierelement (3) die Schaltstange (1) in einer ersten Schaltposition mit einer Fixierkraft und in einer zweiten Halteposition mit einer größeren Fixierkraft beaufschlagt.

3. Vorrichtung nach Anspruch 1 oder 2,
**dadurch gekennzeichnet, daß**
das Fixierelement (3) wirkverbunden durch eine Feder (6) in der Schaltposition des Stellelementes mit einer Fixierkraft und in der Halteposition durch ein federgespanntes Stellelement (4) direkt mit einer größeren Fixierkraft beaufschlagt wird.

4. Vorrichtung nach einem der Ansprüche 1 bis 3,
**dadurch gekennzeichnet, daß**
das Stellelement (4) als Schaltstift (4) ausgebildet ist, der mittels einer Steuereinrichtung (17) durch axiale Verschiebung von der Schaltposition in die Halteposition und vice versa bringbar ist.

5. Vorrichtung nach einem der Ansprüche 1 bis 4,
**dadurch gekennzeichnet, daß**
der Schaltstift (4) mittels einer hydraulischen Steuereinrichtung (17) betätigbar ist.

6. Vorrichtung nach einem der Ansprüche 1 bis 5,
**dadurch gekennzeichnet, daß**
dem Schaltstift (4) eine erste Feder (6) und eine zweite Feder (8) zugeordnet ist, wobei die Federn (6, 8) in gegenläufiger Verstellung zu dem Schaltstift (4) angeordnet sind.

7. Vorrichtung nach einem der Ansprüche 1 bis 6,
**dadurch gekennzeichnet, daß**
die erste Feder (6) mit einem ersten Ende an dem Fixierelement (3) anliegt und sich mit dem anderen gegenüberliegenden Ende gegen einen ersten Anschlag (7) des Schaltstiftes (4) abstützt.

8. Vorrichtung nach einem der Ansprüche 1 bis 7,
**dadurch gekennzeichnet, daß**
die zweite Feder (8) mit einem ersten Ende gegen ein Gehäuseteil (10) und mit einem gegenüberliegenden Ende gegen einen zweiten Anschlag (9) des Schaltstiftes (4) abstützt.

9. Vorrichtung nach einem der Ansprüche 1 bis 8,
**dadurch gekennzeichnet, daß**
die erste und zweite Feder (6, 8) zum Schaltstift (4) koaxial und axial versetzt zueinander angeordnet sind.

10. Vorrichtung nach einem der Ansprüche 1 bis 9,
**dadurch gekennzeichnet, daß**
der Schaltstift (4) in einem in axialer Richtung zwischen der ersten Feder (6) und der zweiten Feder (8) liegenden Bereich (11) über einen Anschluß (13) mit der Steuereinrichtung (17) verbunden ist.

11. Vorrichtung nach einem der Ansprüche 1 bis 10,
**dadurch gekennzeichnet, daß**
der Schaltstift (4) an dem dem Fixierelement (3) gegenüberliegenden Stirnbereich (50) über einen Anschluß (51) mit der Steuereinrichtung (17) verbunden ist.

12. Vorrichtung nach einem der Ansprüche 1 bis 11,
**dadurch gekennzeichnet, daß**
die Steuereinrichtung (17) mindestens ein Schaltventil (15) und mindestens eine Druckmittelquelle (14) aufweist, mittels welcher der Schaltstift (4) entsprechend der Ansteuerung der Steuereinrichtung (17) beaufschlagt werden kann.

13. Vorrichtung nach Anspruch 12,
**dadurch gekennzeichnet, daß**
mittels der Steuereinrichtung (17) weitere Einrichtungen in Verbindung mit der Ansteuerung des Schaltstiftes (4) angesteuert werden können.

14. Vorrichtung nach einem der Ansprüche 12 oder 13,
**dadurch gekennzeichnet, daß**
die weitere Einrichtungen ein Kurzschlußventil im hydrostatischen Antriebsstang ist.

15. Vorrichtung nach einem der Ansprüche 1 bis 14,
**dadurch gekennzeichnet, daß**
bei einer Ansteuerung der Steuervorrichtung (17) der Schaltstift (4) aus seiner Halteposition in seine Schaltposition mit niedrigerer Fixierkraft gebracht wird.

16. Vorrichtung nach einem der Ansprüche 1 bis 15,
**dadurch gekennzeichnet, daß**
die Ansteuerung der Steuervorrichtung (17) derart erfolgt, daß der Schaltstift (4) entgegen der Federwirkung der zweiten Feder (8) verschoben wird.

17. Vorrichtung nach einem der Ansprüche 1 bis 16,
**dadurch gkennzeichnet**, **daß**
die Ansteuerung der Steuereinrichtung (17) derart erfolgt, daß das Fixierelement (3) in der Halteposition des Stellelementes (4) zusätzlich mit einer Sperrkraft beaufschlagt wird.

18. Vorrichtung nach einem der Ansprüche 1 bis 17,
**dadurch gekennzeichnet, daß**
die Ansteuerung der Steuereinrichtung (17) unter Berücksichtigung weiterer auf die Fahrgeschwindigkeit des Fahrzeuges einflußnehmenden Einrichtungen, wie beispielsweise die Fahrzeugbremseinrichtung oder der hydrostatischen Antriebseinheit oder dessen Stelleinrichtungen durchgeführt wird.

19. Vorrichtung nach Anspruch 16,
**dadurch gekennzeichnet, daß**
das bei der Ansteuerung der Steuereinrichtung (17) die Stellung des Fahrhebel (34) berücksichtig wird.

20. Vorrichtung nach Anspruch 18 oder 19,
**dadurch gekennzeichnet, daß**
bei der Ansteuerung der Steuereinrichtung (17) die Stellung des Schalthebels (53) beziehungsweise die Stellung eines an diesem angebrachten Tasters (56) berücksichtig wird.

21. Vorrichtung nach einem der Ansprüche 18 bis 20,
**dadurch gekennzeichnet, daß**
bei der Ansteuerung der Steuereinrichtung (17) die Stellung einer Bremsbetätigungseinrichtung (54) berücksichtig wird.

22. Vorrichtung nach mindestens einem der Ansprüche 1 bis 21,
**dadurch gekennzeichnet, daß**
durch die Betätigung des Tasters (56) das Stellelement (4) aus der Halteposition in die Schaltposition verstellt wird.

23. Vorrichtung nach der Anspruch 22,
**dadurch gekennzeichnet, daß**
gleichzeitig mit der Verstellung des Stellelementes (4) in die Schaltposition auch das Kurzschlußventil (57) betätigt wird.

24. Vorrichtung nach einem der Ansprüche 22 bis 23,
**dadurch gekennzeichnet, daß**
die Bewegung des Stellelementes (4) nur dann erfolgt, wenn eine bestimmte Fahrgeschwindigkeit des Fahrzeuges unterschritten ist.

25. Vorrichtung nach einem der Ansprüche 22 bis 24,
**dadurch gekennzeichnet, daß**
die Bewegung des Stellelementes (4) nur dann erfolgt, wenn der Fahrhebel sich in seiner Neutralstellung befindet.

26. Vorrichtung nach einem der Ansprüche 22 bis 25,
**dadurch gekennzeichnet, daß**
das Stellelement (4) mit einer Sperrkraft beaufschlagt wird, wenn die Bremseinrichtung betätigt wird.

27. Vorrichtung nach Anspruch 26,
**dadurch gekennzeichnet, daß**
das Stellelement (4) nur dann mit einer Sperrkraft beaufschlagt wird, wenn ein oder ein bestimmter Gang im Schaltgetriebe (2) eingelegt ist.

28. Vorrichtung nach einem der Ansprüche 25 oder 26,
**dadurch gekennzeichnet, daß**
das Stellelement (4) nur dann mit einer Sperrkraft beaufschlagt wird, wenn der Fahrhebel sich außerhalb seiner Neutralstellung befindet.

## Claims

1. Device for arresting a shifter rod (1) of a multiple gear control mechanism (2) with at least one shifter rod (1) comprising at least one fixing element (3) as well as a servoelement (4), the shifter rod (1) being able to be acted upon in each case in a predetermined position by at least one fixing element (3) for the fixing of the shifter rod (1) and the fixing element (3) being connected to the servoelement (4) such that the servoelement (4) can be adjusted by means of a control device (17) in at least two different positions relative to the fixing element (3, 24), **characterized in that** separate spring elements (6, 8) are assigned to the servoelement (4) and the fixing element (3), the elastic force of the spring (8) assigned to the servoelement (4) being greater than the elastic force of the spring (6) assigned to the fixing element (3).

2. Device according to claim 1, **characterized in that** the servoelement (4) can be brought into two positions, the fixing element (3) acting on the shifter rod (1) with one fixing force in a first switching position and with a greater fixing force in a second holding position.

3. Device according to claim 1 or 2, **characterized in that** the fixing element (3) is acted upon with one fixing force in active connection with a spring (6) in the switching position of the servoelement and directly with a greater fixing force by a spring-tensioned servoelement (4) in the holding position.

4. Device according to one of claims 1 to 3, **characterized in that** the servoelement (4) is developed as a shifter rod (4) which can be brought by means of a control device (17) from the switching position into the holding position by axial displacement and vice versa.

5. Device according to one of claims 1 to 4, **characterized in that** the shifter rod (4) can be actuated by means of a hydraulic control device (17).

6. Device according to one of claims 1 to 5, **characterized in that** a first spring (6) and a second spring (8) are assigned to the shifter rod (4) and a second spring (8), the springs (6, 8) being arranged counter-positioned relative to the shifter rod (4).

7. Device according to one of claims 1 to 6, **characterized in that** the first spring (6) lies with a first end against the fixing element (3) and rests with the other opposite end against a first stop (7) of the shifter rod (4).

8. Device according to one of claims 1 to 7, **characterized in that** the second spring (8) lies with a first end against a housing part (10) and rests with an opposite end against a second stop (9) of the shifter rod (4).

9. Device according to one of claims 1 to 8, **characterized in that** the first and second springs (6 ,8) are arranged coaxially and axially offset to the shifter rod (4) relative to each other.

10. Device according to one of claims 1 to 9, **characterized in that** the shifter rod (4) is connected to the control unit (17) via a connection (13) in an area (11) lying in axial direction between the first spring (6) and the second spring (8).

11. Device according to one of claims 1 to 10, **characterized in that** the shifter rod (4) is connected to the control device (17) via a connection (51) at the end area (50) lying opposite the fixing element (3).

12. Device according to one of claims 1 to 11, **characterized in that** the control device (17) has at least one on-off valve (15) and at least one pressure-means source (14) by means of which the shifter rod (4) can be acted upon corresponding to the operation of the control device (17).

13. Device according to claim 12, **characterized in that** further devices can be operated by means of the control device (17) in connection with the operation of the shifter rod (4).

14. Device according to one of claims 12 or 13, **characterized in that** the further device[s] is a short-circuit valve in the hydrostatic drive rod.

15. Device according to one of claims 1 to 14, **characterized in that** upon operation of the control device (17) the shifter rod (4) is brought with lower fixing force out of its holding position into its switching position.

16. Device according to one of claims 1 to 15, **characterized in that** the operation of the control device (17) takes place such that the shifter rod (4) is displaced against the elastic force of the second spring (8).

17. Device according to one of claims 1 to 16, **characterized in that** the operation of the control device (17) takes place such that the fixing element (3) is additionally acted upon by a locking force in the holding position of the servoelement (4).

18. Device according to one of claims 1 to 17, **characterized in that** the operation of the control device (17) is carried out taking account of further devices influencing the speed of travel of the vehicle, such as for example the vehicle braking system or the hydrostatic drive unit or its servodevices.

19. Device according to claim 16, **characterized in that** upon the operation of the control device (17) the position of the foot pedal (34) is taken into account.

20. Device according to claim 18 or 19, **characterized in that** upon the operation of the control device (17) the position of the gear-shift lever (53) or the position of a push-button (56) attached to the latter is taken into account.

21. Device according to one of claims 18 to 20, **characterized in that** upon the operation of the control device (17) the position of a brake-actuating device (54) is taken into account.

22. Device according to at least one of claims 1 to 21, **characterized in that** the servoelement (4) is shifted out of the holding position into the switching position by the actuation of the push-button (56).

23. Device according to claim 22, **characterized in that** simultaneously with the shifting of the servoelement (4) into the switching position the short-circuit valve (57) is also actuated.

24. Device according to one of claims 22 to 23, **characterized in that** the movement of the servoelement (4) takes place only if a specific speed of travel of the vehicle is not reached.

25. Device according to one of claims 22 to 24, **characterized in that** the movement of the servoelement (4) takes place only if the foot pedal is in its neutral position.

26. Device according to one of claims 22 to 25, **characterized in that** the servoelement (4) is acted upon by a locking force if the brake device is actuated.

27. Device according to claim 26, **characterized in that** the servoelement (4) is acted upon by a locking force only if a or a specific gear is engaged in the gear control mechanism (2).

28. Device according to one of claims 25 or 26, **characterized in that** the servoelement (4) is acted upon by a locking force only if the foot pedal is outside its neutral position.

## Revendications

1. Dispositif de blocage pour une tige de commande (1) d'une boîte de vitesses (2) à plusieurs rapports avec au moins une tige de commande (1), comportant au moins un élément d'arrêt (3) ainsi qu'un élément de verrouillage (4), la tige de commande (1) étant en prise chaque fois dans une position prédéterminée avec au moins un élément d'arrêt (3) aux fins de retenir ladite tige de commande (1), et l'élément d'arrêt (3) étant lié à l'élément de verrouillage (4) d'une manière telle que l'élément de verrouillage (4) puisse être déplacé dans au moins deux positions différentes par rapport à l'élément d'arrêt (3) à l'aide d'un dispositif de commande (17), **caractérisé par le fait que** des éléments élastiques (6, 8) distincts sont associés à l'élément de verrouillage (4) et à l'élément d'arrêt (3), la force de rappel du ressort (8) associé à l'élément de verrouillage (4) étant supérieure à la force de rappel du ressort (6) associé à l'élément d'arrêt (3).

2. Dispositif selon la revendication 1, **caractérisé par le fait que** l'élément de verrouillage (4) peut être amené dans deux positions, l'élément d'arrêt (3) sollicitant la tige de commande avec une force d'arrêt dans une première position de commande et avec une force d'arrêt plus grande dans une deuxième position de verrouillage.

3. Dispositif selon la revendication 1 ou 2, **caractérisé par le fait que** l'élément d'arrêt (3), lié fonctionnellement à un ressort (6), dans la position de commande de l'élément de changement de rapport de l'élément commandé, est sollicité par une force d'arrêt et, dans la position de verrouillage, est sollicité directement avec une force d'arrêt plus grande par un élément de verrouillage (4) précontraint par ressort.

4. Dispositif selon une de revendications 1 à 3, **caractérisé par le fait que** l'élément de verrouillage (4, 20) est conformé en doigt de commande (4) qui peut être amené par déplacement axial à l'aide d'un dispositif de contrôle (17) de la position de manoeuvre dans la position d'arrêt et vice versa.

5. Dispositif selon une des revendications 1 à 4, **caractérisé par le fait que** le doigt de commande (4) peut être actionné à l'aide d'un dispositif de contrôle (17) hydraulique.

6. Dispositif selon une des revendications 1 à 5, **caractérisé par le fait qu'**au doigt de commande (4) sont associés un premier ressort (6) et un second ressort (8), les ressorts (6, 8) étant disposés en opposition par rapport au doigt de commande (4).

7. Dispositif selon une des revendications 1 à 6, **caractérisé par le fait que** le premier ressort (6), par une première extrémité, est en appui sur l'élément d'arrêt (3) et par son extrémité opposée prend appui contre une première butée (7) du doigt de commande (4).

8. Dispositif selon une des revendications 1 à 7, **caractérisé par le fait que** le second ressort (8), par une première extrémité, est en appui sur un élément de boîtier (10) et par son extrémité opposée prend appui sur une seconde butée (9) du doigt de commande (4).

9. Dispositif selon une des revendications 1 à 8, **caractérisé par le fait que** les premier et second ressorts (6, 8), par rapport au doigt de commande (4), sont disposés coaxialement et sont décalés axialement l'un par rapport à l'autre.

10. Dispositif selon une des revendications 1 à 9, **caractérisé par le fait que** le doigt de commande (4) dans une partie (11) située entre le premier ressort (6) et le second ressort (8) est connecté au dispositif de contrôle (17) par l'intermédiaire d'un raccord (13).

11. Dispositif selon une des revendications 1 à 10, **caractérisé par le fait que** le doigt de commande (4) dans sa partie frontale (50) en vis-à-vis de l'élément d'arrêt (3) est connecté au dispositif de contrôle (17) par l'intermédiaire d'un raccord (51).

12. Dispositif selon une des revendications 1 à 11, **caractérisé par le fait que** le dispositif de contrôle (17) comporte au moins une soupape de contrôle (15) et au moins une source de fluide sous pression (14) à l'aide desquels le doigt de commande (4) peut être sollicité en accord avec la commande du dispositif de contrôle (17).

13. Dispositif selon la revendication 12, **caractérisé par le fait qu'**à l'aide du dispositif de contrôle (17) des dispositifs supplémentaires peuvent être commandés en liaison avec la commande du doigt de commande (4).

14. Dispositif selon une des revendications 12 ou 13, **caractérisé par le fait que** les dispositifs supplémentaires sont une soupape de court-circuit dans la chaîne de transmission hydrostatique.

15. Dispositif selon une des revendications 1 à 14, **caractérisé par le fait qu'**en présence d'une action du dispositif de contrôle (17) le doigt de commande (4) est amené de sa position de verrouillage dans sa position de manoeuvre avec une force d'arrêt plus faible.

16. Dispositif selon une des revendications 1 à 15, **caractérisé par le fait que** l'action du dispositif de contrôle (17) est telle que le doigt de commande (4) est déplacé à l'encontre de la force élastique du second ressort (8).

17. Dispositif selon une des revendications 1 à 16, **caractérisé par le fait que** l'action du dispositif de contrôle (17) est telle que l'élément d'arrêt (3) dans la position de verrouillage de l'élément de verrouillage (4) est sollicité par une force de blocage.

18. Dispositif selon une des revendications 1 à 17, **caractérisé par le fait que** l'action du dispositif de contrôle (17) a lieu en tenant compte des dispositifs supplémentaires qui influent sur la vitesse de d'avancement, tels que le dispositif de freinage du véhicule ou l'unité d'entraînement hydrostatique ou le dispositif de réglage de celle-ci.

19. Dispositif selon la revendication 16, **caractérisé par le fait que** l'action du dispositif de contrôle (17) tient compte de la position du levier d'avancement (34).

20. Dispositif selon la revendication 18 ou 19, **caractérisé par le fait que** l'action du dispositif de contrôle (17) tient compte de la position du levier de changement de vitesse (53) ou de la position d'un palpeur (56) monté sur celui-ci.

21. Dispositif selon une des revendications 18 à 20, **caractérisé par le fait que** l'action du dispositif de contrôle (17) tient compte de la position d'un dispositif d'actionnement de frein (54).

22. Dispositif selon au moins une des revendications 1 à 21, **caractérisé par le fait que** l'élément de verrouillage (4) est amené de la position de blocage dans la position de commande par actionnement du contacteur (56).

23. Dispositif selon la revendication 22, **caractérisé par le fait que** la soupape de court-circuit (57) est actionnée simultanément au déplacement de l'élément de verrouillage (4) dans la position de commande.

24. Dispositif selon une des revendications 22 à 23, **caractérisé par le fait que** le déplacement de l'élément de verrouillage (4) n'a lieu que lorsque la vitesse du véhicule est inférieure à une vitesse déterminée.

25. Dispositif selon au moins une des revendications 22 à 24, **caractérisé par le fait que** le déplacement de l'élément de verrouillage (4) n'a lieu que lorsque le levier de changement de vitesse est dans sa position neutre.

26. Dispositif selon au moins une des revendications 22 à 25, **caractérisé par le fait que** l'élément de verrouillage (4) est sollicité par une force de blocage lorsque le frein est actionné.

27. Dispositif selon la revendication 25, **caractérisé par le fait que** l'élément de verrouillage (4) n'est sollicité par une force de blocage que lorsqu'un rapport voire un rapport déterminé est sélectionné dans la boîte de vitesses.

28. Dispositif selon la revendication 25 ou 26, **caractérisé par le fait que** l'élément de verrouillage (4) n'est sollicité par une force de blocage que lorsque le levier d'avancement se trouve hors de sa position neutre.
